# EUROPEAN PATENT SPECIFICATION

(11) **EP 1 332 831 B1**
(45) Date of publication and mention of the grant of the patent: **27.04.2005**
(21) Application number: 01972512.6
(22) Date of filing: 26.09.2001
(51) Int. Cl.: B23K 35/26

(54) **ALLOY FOR SOLDER AND SOLDER JOINT**
LEGIERUNG ZUM LÖTEN UND FÜR LÖTVERBINDUNG
ALLIAGE DESTINE AU BRASAGE TENDRE ET A DES JOINTS A BRASURE TENDRE

(30) Priority: 24.10.2000 JP 2000324546
(43) Date of publication of application: 06.08.2003
(73) Proprietor: FUJITSU LIMITED, Kawasaki-shi, Kanagawa 211-8588 (JP)
(72) Inventor: KITAJIMA, Masayuki, C/O FUJITSU LIMITED, Kawasaki-shi, Kanagawa 211-8588 (JP); SHONO, Tadaaki, C/O FUJITSU LIMITED, Kawasaki-shi, Kanagawa 211-8588 (JP); HONMA, Hitoshi, C/O FUJITSU LIMITED, Kawasaki-shi, Kanagawa 211-8588 (JP); TAKESUE, Masakazu, C/O FUJITSU LIMITED, Kawasaki-shi, Kanagawa 211-8588 (JP); NODA, Yutaka, C/O FUJITSU LIMITED, Kawasaki-shi, Kanagawa 211-8588 (JP)
(74) Representative: Fenlon, Christine Lesley
(86) International application number: PCT/JP2001/008399
(87) International publication number: WO 2002/034969

(56) References cited:
- EP-A- 1 038 628
- EP-A- 1 080 824
- WO-A-00/54927
- JP-A- 9 206 983
- JP-A- 59 042 197
- JP-A- 2000 015 478
- JP-A- 2000 326 088
- JP-A- 2001 150 179
- JP-B2- 62 035 876
- US-A- 4 042 725
- US-A- 5 445 004
- US-A- 5 851 482
- PATENT ABSTRACTS OF JAPAN vol. 1997, no. 12, 25 December 1997 (1997-12-25) & JP 09 206983 A (SONY CORP), 12 August 1997 (1997-08-12)
- YU S-P ET AL: "COMPOSITION AND HEAT-TREATMENT EFFECTS ON THE ADHESION STRENGTH OF SN-ZN-AL SOLDERS ON CU SUBSTRATE" JOM, MINERALS, METALS AND MATERIALS SOCIETY, WARRENDALE, US, vol. 52, no. 6, June 2000 (2000-06), pages 36-39, XP009030693 ISSN: 1047-4838
- HARRIS P: "INTERFACIAL REACTIONS OF TIN-ZINC-BISMUTH ALLOYS" SOLDERING AND SURFACE MOUNT TECHNOLOGY, XX, XX, vol. 11, no. 3, 1999, pages 46-52, XP009030708 ISSN: 0954-0911

## Description

### TECHNICAL FIELD

The present invention relates to a solder alloy, and a soldered bond of an electric or electronic device, that has improved environmental safety.

### BACKGROUND ART

Lead-tin (Pb-Sn) solder alloys have conventionally been used in a large amount for solder bonding of various kinds of electric and electronic devices because they have a low melting point and good wettability even in oxidizing atmosphere such as air. However, because of the toxicity of Pb, regulations have been imposed on the services and operations using Pb and Pb-containing alloys, so that the occurrence of Pb-intoxation has been heretofore minimized.

Recent increase in the concern about environmental disruption is raising questions about the disposal of various industrial devices using Pb-containing solder alloys, such as electric and electronic devices.

The electric and electronic devices have been generally disposed of by reclamation as in the case of usual industrial and nonindustrial wastes. However, concern about the impact of harmful effect on environment and living organism, caused by elution of Pb if a large amount of electric or electronic device wastes including Pb-containing solder alloys, is kept being disposed by reclamation without pretreatment.

In the near future, it will probably be made compulsory to collect Pb from used electric and electronic devices, which include a large amount of Pb-containing solder alloy, before disposal.

However, it is not yet technologically possible to remove Pb efficiently and effectively from the used electric and electronic devices. It is also possible that the Pb collection cost would cause an increase in the product cost.

Therefore, it is strongly desired that a Pb-free solder alloy containing no Pb is developed.

As a Pb-free solder alloy, a Sn-based alloy containing combined additives such as Zn, Ag, Bi and Cu has been put into practical use, but only in limited special applications. This is because the alloy does not have good solderability, i.e. the essential properties of the conventional Pb-Sn solder alloy for general applications such as low melting point, good wettability, capability for reflow treatment, freedom from reaction with the base material that would cause formation of a brittle compound layer or an embrittled layer.

Sn-Zn solder alloy is most useful Pb-free solder alloy at present. Sn-Zn solder alloy has a melting point of near 200°C and is expected to provide a replacement for the conventional Sn-Pb alloy.

However, Zn easily oxidizes and has poor solder wettability and it is necessary to use nitrogen gas or other non-oxidizing atmospheres in order to ensure good solderability.

To provide Sn-Zn solder alloy with an improved wettability, the addition of Cu or Ge was proposed but this did not provide an expected improvement in wettability. Instead, the Cu addition causes rapid formation of Cu-Zn intermetallic compound in the solder alloy to deteriorate the properties of the solder alloy.

Moreover, Zn has so high an activity that, when soldering is effected on a Cu base material, a thick layer of Cu-Zn intermetallic compound easily forms even with a small heat input to reduce the bond strength. In this case, the base material/solder interface presumably has a structure of Cu base/β'-CuZn layer/γ-CU₅Zn₈ layer/solder layer. A Cu-Zn intermetallic compound has a very weak bond strength at the interface with the solder and this causes exfoliation to easily occur. This cannot be avoided if the Cu base material is coated with Ni/Au, Pd or Pd/Au plating.

Therefore, Sn-Zn solder alloy has not yet been put into practical use from the viewpoint of the reliability of electronic devices.

### DISCLOSURE OF THE INVENTION

The object of the present invention is to provide a Pb-free solder alloy and a soldered bond using the same, in which the solder alloy has no harmful environmental effect but has a solderability comparable to that of the conventional Pb-Sn solder alloy.

To achieve the object according to the first aspect of the present invention, there is provided a solder alloy consisting of:
Zn: 3.0 - 14.0 wt%,
Al: 0.0020 - 0.0080 wt%, and
the balance of Sn and unavoidable impurities.

According to the first aspect, there is also provided a soldered bond of an electric or electronic device, said bond being composed of a solder alloy consisting of:
Zn: 3.0 - 14.0 wt%,
Al: 0.0020 - 0.0080 wt%, and
the balance of Sn and unavoidable impurities.

According to the second aspect of the present invention, there is provided a solder alloy consisting of:
Zn: 3.0 - 14.0 wt%,
Bi: 3.0 - 6.0 wt%,
Al: 0.0020 - 0.0100 wt%, and
the balance of Sn and unavoidable impurities.

According to the second aspect, there is also provided a soldered bond of an electric or electronic device, said bond being composed of a solder alloy consisting of:
Zn: 3.0 - 14.0 wt%,
Bi: 3.0 - 6.0 wt%,
Al: 0.0020 - 0.0100 wt%, and
the balance of Sn and unavoidable impurities.

The contents of the component elements are limited for the following reasons.

### Zn: 3 - 14 wt% (1st and 2nd aspects)

Zn is an essential component to provide a low melting point and improved wettability of the solder alloy. The Zn content of 3 - 14 wt% stably ensures good wettability. A Zn content of either less than 3 wt% or more than 14 wt% deteriorates the wettability.

### Al: 0.0020 - 0.0080 wt% (1st aspect, Bi absent)

### Al: 0.0020 - 0.0100 wt% (2nd aspect, Bi present)

Al suppresses oxidation of Sn-Zn alloy to ensure good wettability. As heretofore described, Zn easily oxidizes to form an oxide film on the solder layer that intervenes between the solder layer and a base material and blocks wetting of the base material by the solder. To ensure the oxidation suppression effect, Al must be present in an amount of 0.0020 wt% or more. However, experiments have shown that an excessive amount of Al causes formation of a thick oxide film, which deteriorates the wettability. Therefore, the Al content must not be more than 0.0080 wt% for the alloy of the first aspect and must not be more than 0.0100 wt% for the alloy of the second aspect.

### Bi: 3.0 - 6.0 wt% (2nd aspect)

Bi further lowers the melting point and improves the wettability of the solder alloy. To ensure this effect, the Bi content must be 3.0 wt% or more. However, excessive amounts of Bi cause the solder to have an excessively high hardness causing embrittlement, so that a reliable soldered bond cannot be obtained. Therefore, the Bi content must not be more than 6.0 wt%.

Solder alloys, particularly solder alloys for soldering of electric or electronic devices must have the following properties.
1) Soldering can be effected at a low temperature as close as possible to that of the conventional Sn-Pb eutectic solder alloy. Specifically, the soldering temperature should not be far above 200°C, preferably not higher than about 220°C.
2) Good wetting with the base material is ensured.
3) No brittle intermetallic compounds and no embrittled layers are formed by reaction of the solder alloy with the base material.
4) The alloying elements form no oxides which cause occurrence of poor wetting, voids, bridges or other defects.
5) The solder alloy can be provided in a form suitable for working and feeding in soldering on mass production lines, for example, in a solder paste form, a solder ball form for BGA, etc.

The present invention provides a Zn-Al-Sn solder alloy and a Zn-Bi-Al-Sn solder alloy not only having an improved environmental safety but also satisfying the above-summarized property requirements.

### BRIEF DESCRIPTION OF THE DRAWINGS

Figure 1 is a graph showing the meniscus testing method for evaluating the wettability;
Fig. 2 is a schematic illustration showing the lap joint bond strength testing method;
Fig. 3 is a graph showing the relationship between the Zn content and the melting point of X wt% Zn-0.0060 wt% Al-Sn solder alloys;
Fig. 4 is a graph showing the relationship between the Zn content and the time to wetting of X wt% Zn-0.0060 wt% Al-Sn solder alloys at different temperatures;
Fig. 5 is a graph showing the relationship between the Al content and the time to wetting of 4 wt% Zn-X wt% Al-Sn solder alloys at different temperatures;
Fig. 6 is a graph showing the relationship between the Al content and the time to wetting of 8 wt% Zn-X wt% Al-Sn solder alloys at different temperatures;
Fig. 7 is a graph showing the relationship between the Al content and the time to wetting of 10 wt% Zn-X wt% Al-Sn solder alloys at different temperatures;
Fig. 8 is a graph showing the relationship between the Zn content and the melting point of X wt% Zn-3 wt% Bi-0.0060 wt% Al-Sn solder alloys;
Fig. 9 is a graph showing the relationship between the Bi content and the melting point of 8 wt% Zn-X wt% Bi-0.0060 wt% Al-Sn solder alloys;
Fig. 10 is a graph showing the relationship between the Bi content and the time to wetting of 8 wt% Zn-X wt% Bi-0.0060 wt% Al-Sn solder alloys at different temperatures;
Fig. 11 is a graph showing the relationship between the Al content and the time to wetting of 8 wt% Zn-3 wt% Bi-X wt% Al-Sn solder alloys at different temperatures;
Fig. 12 is a graph comparing the lap joint bond strengths of different solder alloys;
Fig. 13 is a graph showing the concentration distribution of elements along the depth direction in the surface region of a Sn-Zn-Al solder alloy powder particle;
Fig. 14 schematically shows the formation of solder balls in a soldered bond when using a Sn-Zn-Al solder alloy powder;
Fig. 15 shows photographs of solder balls formed in soldered bonds when using a Sn-Zn-Al solder alloy powder and a Sn-Zn-Bi-Al solder alloy powder;
Fig. 16 is a graph showing the relationship between the Al content of a Sn-Zn-Al solder alloy powder and the rate of incidence of solder balls in the solder bond; and
Fig. 17 is a graph showing the relationship between the Al content of a Sn-Zn-Bi-Al solder alloy powder and the rate of incidence of solder balls in the soldered bond.

### BEST MODE FOR CARRYING OUT THE INVENTION

Solder alloys having different chemical compositions, as summarized in Tables 1 and 2, were produced by melting and the melting point (liquidus temperature), the time to wetting and the bond strength were measured by the following methods.

### Measuring Melting Point

The DSC melting point measuring method (differential scanning calorimetry) was used to determine the liquidus temperature as a representative of melting point.

### Measuring Time to Wetting

A RHESCA Meniscus Tester (Solder Checker Model SAT-5000) was used to determine the time to wetting as a representative of the wettability by the following meniscus test. The testing atmosphere was air. To study the influence of the oxygen concentration of the atmosphere, Samples No. 45 and No. 61, which had the same chemical compositions as those of Samples No. 44 and 60, respectively, were tested in a nitrogen atmosphere containing 2000 ppm oxygen.

### Meniscus Test

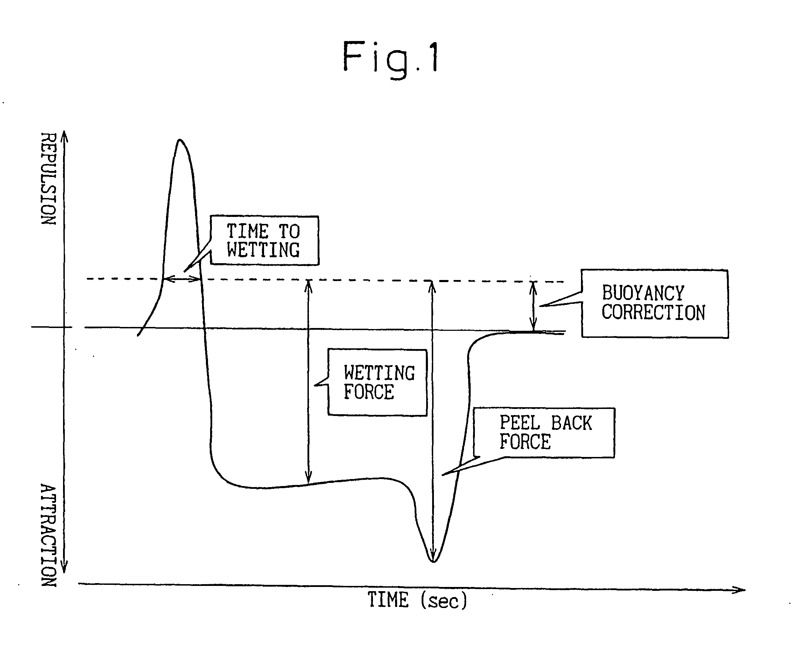

Copper plates (5 mm × 40 mm × 0.1 mm thick) were cleaned with an aqueous solution of hydrochloric acid (about 1.2 mol/liter), applied with an RMA type flux (Tamura Kaken ULF-500VS), and immersed in solder alloy melts held at 240, 250 and 260°C at an immersing speed of 20 mm/sec to an immersing depth of 5 mm, during which the time to wetting was measured. The measurement time was up to 8 sec. The meniscus test produced a chart as shown in Fig. 1, from which the time to wetting, the wetting force, the peel back force, and other parameters were determined. The time to wetting was selected from these parameters as one most sensitive to the alloy composition to evaluate the wettability.

### Measuring Bond Strength

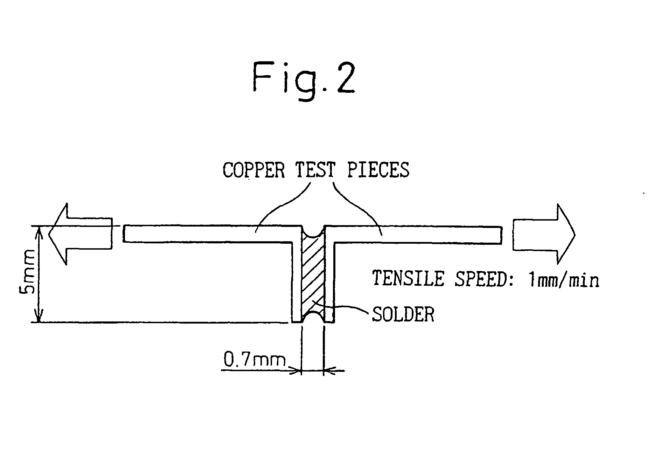

A lap joint bond strength tester was used to determine the bond strength. As shown in Fig. 2, a pair of L-shaped copper test pieces were solder-bonded and were tested by an Instron Tensile Tester at a tensile speed of 1 mm/min.

### Evaluating Measured Data

### <Evaluating Melting Point and Wettability>

### (1) Zn-Al-Sn Alloys (1st aspect of the present invention)

### (1-1) Influence of the Zn content

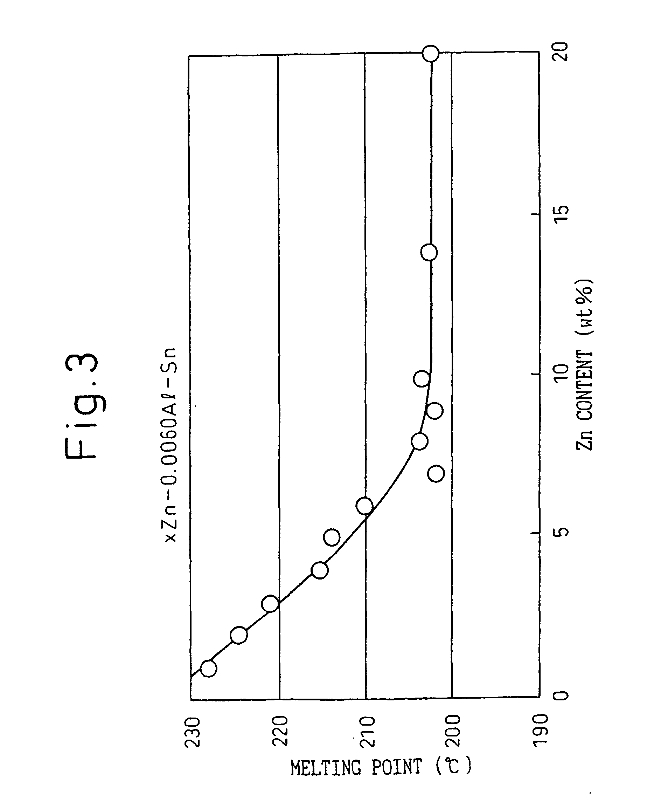

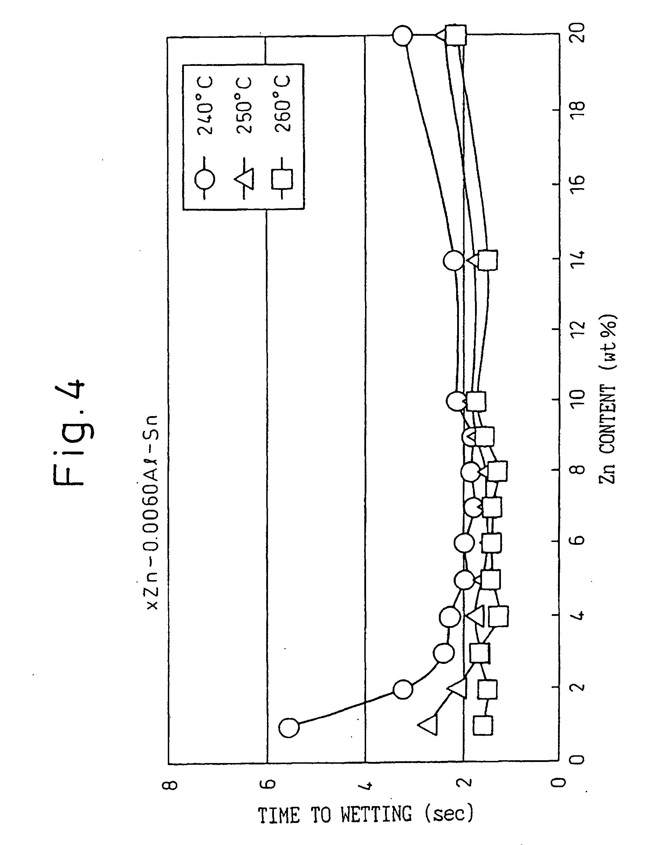

Figures 3 and 4 show the relationship between the Zn content and the melting point (liquidus temperature) and the relationship between the Zn content and the time to wetting, respectively, of Samples 1 to 12 (1.0 - 20.0 wt% Zn-0.0060 wt% Al-Sn) of Table 1. The Al content of 0.0060 wt% is within the specified range of the present invention.

Samples 3 to 11 having the above-mentioned Al content within the specified range and Zn contents within the specified range (3.0 - 14.0 wt%) had low melting points (Fig. 3) and stably exhibited good wettability (short time to wetting: Fig. 4). In contrast, even with the above-mentioned Al content within the specified range, Samples 1 and 2 having Zn contents less than the specified range and Sample 12 having a Zn content more than the specified range exhibited poor wettability (long time to wetting).

### (1-2) Influence of the Al content

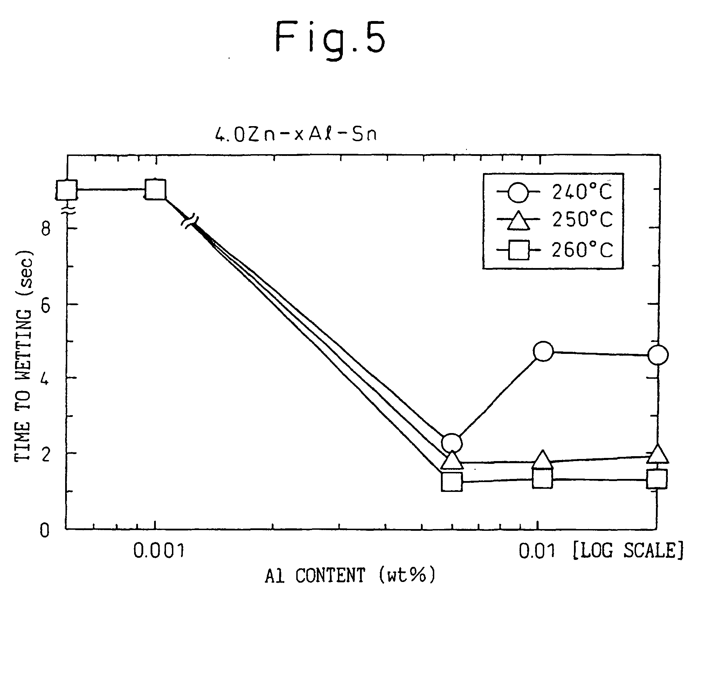

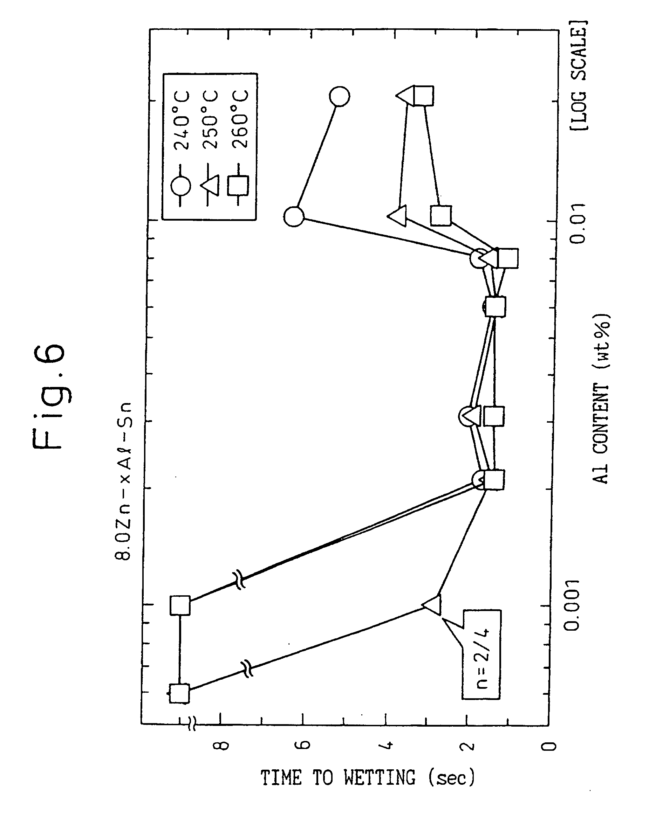

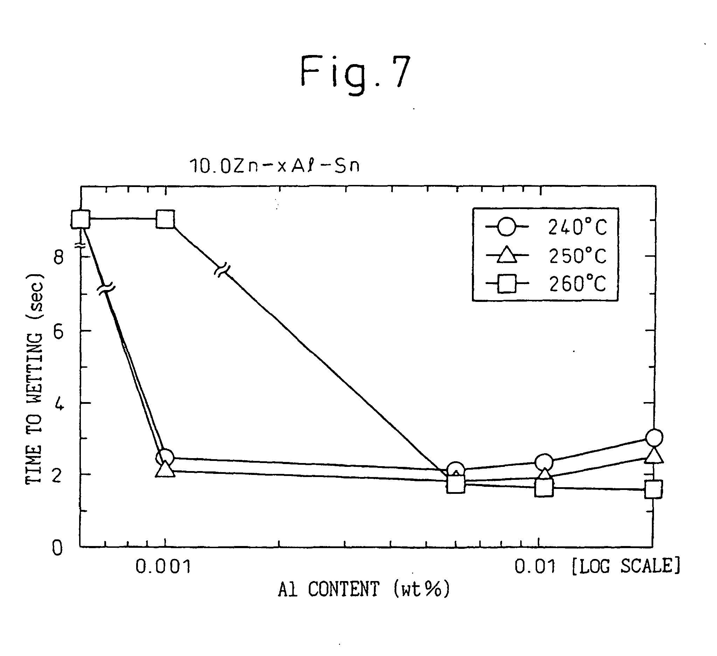

Figures 5, 6 and 7 show the relationship between the Al content and the time to wetting of Samples 13 to 17 (4.0 wt% Zn-0.0006 - 0.0206 wt% Al-Sn), Samples 18 to 29 (8.0 wt% Zn-0.0006 - 0.7912 wt% Al-Sn), and Samples 30 to 34 (10.0 wt% Zn-0.0006 - 0.0206 wt% Al-Sn) of Table 1. The Zn contents of 4.0 wt%, 8.0 wt% and 10.0 wt% are all within the specified range of the present invention.

Samples 15, 20 to 23 and 32 having the above-mentioned Zn contents within the specified range and Al contents within the specified range of the first aspect of the present invention stably exhibited good wettability (short time to wetting). In contrast, even with the above-mentioned Zn contents within the specified range, Samples 14, 18 to 19 and 30 to 31 having Al contents less than the specified range and Samples 16 to 17, 24 to 29 and 33 to 34 exhibited poor wettability (long time to wetting).

### (2) Zn-Bi-Al-Sn alloys (2nd aspect)

### (2-1) Influence of the Zn content

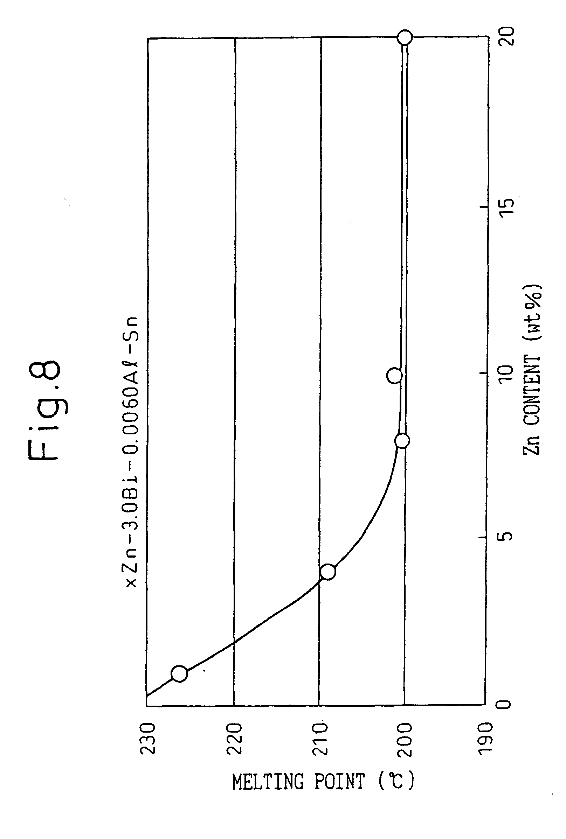

Figure 8 shows the relationship between the Zn content and the melting point of Samples 46 to 50 (1.0 - 20.0 wt% Zn-3.0 wt% Bi-0.0060 wt% Al-Sn) of Table 2. The Bi content of 3.0 wt% and the Al content of 0.0060 wt% are within the respective specified ranges.

Samples having the above-mentioned Bi and Al contents within the respective specified ranges and Zn contents within the specified range had low melting points.

### (2-2) Influence of the Bi content

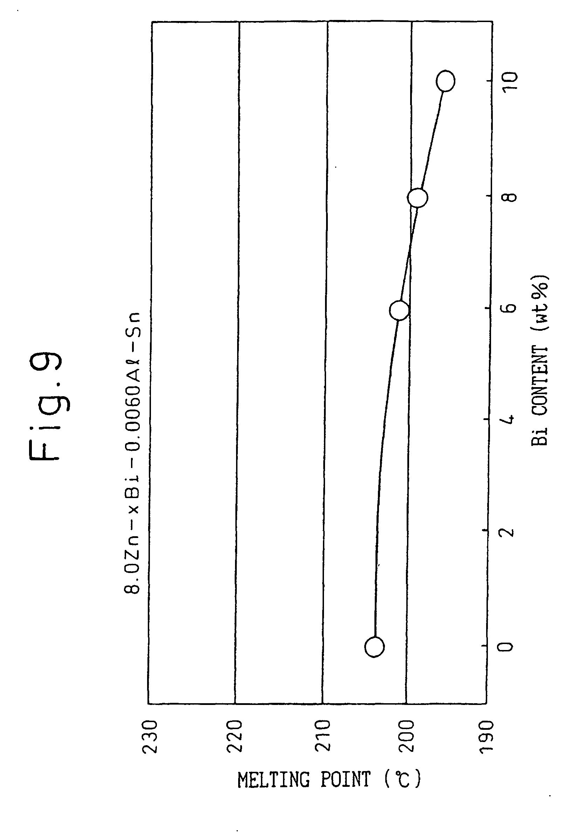

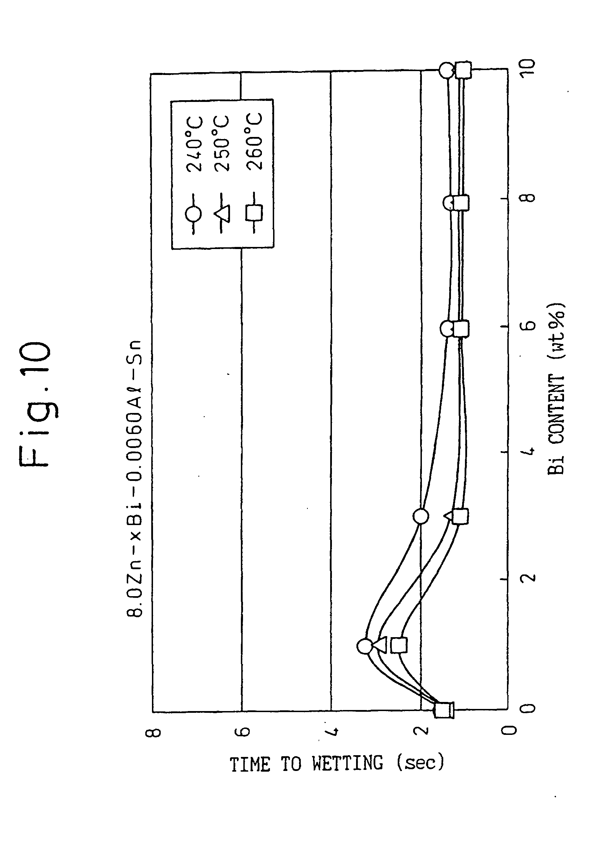

Figures 9 and 10 show the relationship between the Bi content and the melting point and the relationship between the Bi content and the time to wetting, respectively, of Samples 51 to 56 (8.0 wt% Zn-0 - 10.0 wt% Bi-0.0060 wt% Al-Sn) of Table 2. The Zn content of 8.0 wt% and the Al content of 0.0060 wt% are within the specified range.

Samples 53 to 54 having the above-mentioned Zn and Al contents within the respective specified ranges and Bi contents within the specified range (3.0 - 6.0 wt%) had low melting points (Fig. 9) and stably exhibited good wettability (short time to wetting: Fig. 10). In contrast, even with the Zn and Al contents within the respective specified ranges, Sample 52 having a Bi content less than the specified range exhibited poor wettability (long time to wetting). Samples 55 to 56 having the Bi contents more than the specified upper limit of 6.0 wt% had low melting temperatures and exhibited good wettability, but the soldered bond had too high a hardness for practical use.

### (2-3) Influence of the Al content

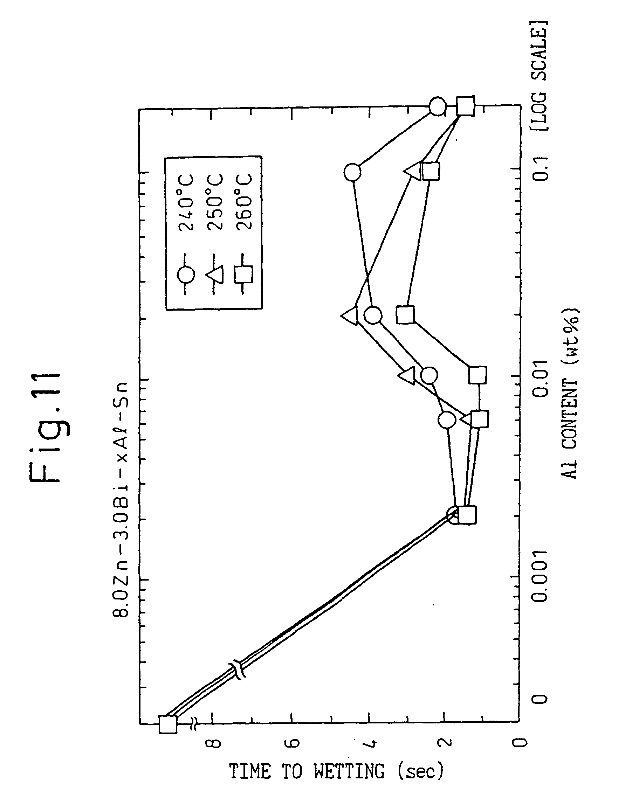

Figure 11 shows the relationship between the Al content and the time to wetting of Samples 35 to 45 (8.0 wt% Zn-3.0 wt% Bi-0 - 0.6500 wt% Al-Sn) of Table 2. The Zn content of 8.0 wt% and the Bi content of 3.0 wt% are within the specified range.

Samples 38 to 40 having the above-mentioned Zn and Bi contents within the respective specified ranges and Al contents within the specified range (0.0020 - 0.0100 wt%) stably exhibited good wettability (short time to wetting). In contrast, even with the Zn and Bi contents within the specified ranges, Samples 35 to 37 having Al contents less than the specified range and Samples 41 to 42 having Al contents more than the specified range exhibited poor wettability (long time to wetting). Samples 43 to 44 having still greater Al contents exhibited an improved wettability (further reduced time to wetting), but will cause a surface segregation of Al during production of solder powder (powder particle size of φ20 - 45 µm) and are not practically acceptable.

Samples 57 to 65 of Table 2 are comparative samples, in which Sample 57 is a conventional Pb-Sn eutectic solder alloy. The other samples are Sn-based Pb-free solder alloys: Sample 58 of Ag-Cu-Sn, Sample 59 of Zn-Sn, Samples 60 and 61 of Zn-Bi-Sn, Samples 62 and 63 of Zn-Bi-Cu-Sn, Sample 64 of Zn-Bi-Ge-Sn, and Sample 65 of Zn-Bi-Ge-Sn.

Comparative Samples 59, 60, and 62 to 65 had poor wettability and Comparative Sample 58 had good wettability but had a melting point as high as 221.1°C, which is not practically acceptable. Sample 61 having the same alloy composition as that of Sample 60 was tested in a nitrogen atmosphere containing 2000 ppm oxygen and exhibited good wettability only in the non-oxidizing atmosphere, and therefore, is not practically acceptable. The same can be seen in Samples 44 and 45 having a Zn content of 8.0 wt% and a Bi content of 3.0 wt%, which both are in the respective specified ranges, and Al contents more than the specified range (0 - 0.6500 wt%).

### <Evaluating Bond Strength>

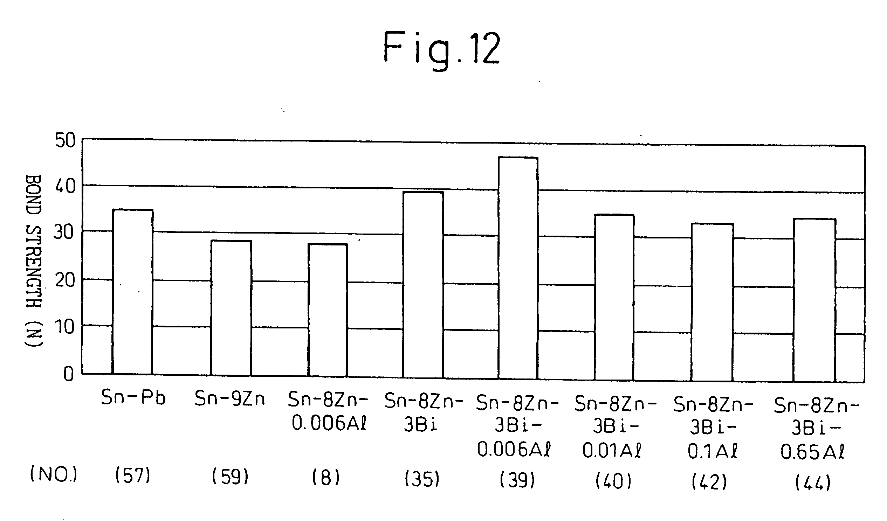

Figure 12 shows the bond strengths of Sample 8 (8.0 wt% Zn-0.0060 wt% Al-Sn), Sample 39 (8.0 wt% Zn-3.0 wt% Bi-0.0060 wt% Al-Sn) and Sample 40 (8.0 wt% Zn-3.0 wt% Bi-0.0100 wt% Al-Sn), in comparison with those of the conventional Pb-Sn eutectic solder alloy (Sample 57) and Pb-free solder alloys outside the specified range (Samples 35, 42, 44 and 59). As can be seen from Fig. 12, the solder alloys according to the present invention had bond strengths comparable with that of the conventional Pb-Sn eutectic solder alloy.

**Table 1**

| Properties of Zn-Al-Sn Solder Alloys | | | | | | | | | | | |
|---|---|---|---|---|---|---|---|---|---|---|---|
| | Sample No. | Composition(wt%) | | | Melting Point(°C) | Time to Wetting (sec) (Note) | | | | | |
| | | Zn | Al | Sn | | 240°C | | 250°C | | 260°C | |
| Comparison | 1 | 1.0 | 0.0060 | Bal. | 227.9 | 5.6 | 3/4 | 2.8 | 4/4 | 1.6 | 4/4 |
| | 2 | 2.0 | " | " | 224.4 | 2.6 | 4/4 | 2.0 | 4/4 | 1.4 | 4/4 |
| Invention | 3 | 3.0 | " | " | 221.0 | 2.4 | 4/4 | 1.7 | 4/4 | 1.7 | 4/4 |
| | 4 | 4.0 | " | " | 215.3 | 2.3 | 4/4 | 1.8 | 4/4 | 1.3 | 4/4 |
| | 5 | 5.0 | " | " | 213.8 | 2.0 | 4/4 | 1.6 | 4/4 | 1.4 | 4/4 |
| | 6 | 6.0 | " | " | 209.9 | 2.0 | 4/4 | 1.5 | 4/4 | 1.4 | 4/4 |
| | 7 | 7.0 | " | " | 201.6 | 1.8 | 4/4 | 1.5 | 4/4 | 1.4 | 4/4 |
| | 8 | 8.0 | " | " | 203.5 | 1.5 | 4/4 | 1.4 | 4/4 | 1.5 | 4/4 |
| | 9 | 9.0 | " | " | 201.9 | 1.8 | 4/4 | 1.8 | 4/4 | 1.5 | 4/4 |
| | 10 | 10.0 | " | " | 203.3 | 2.1 | 4/4 | 1.8 | 4/4 | 1.7 | 4/4 |
| | 11 | 14.0 | " | " | 202.5 | 2.2 | 4/4 | 1.8 | 4/4 | 1.5 | 4/4 |
| Comparison | 12 | 20.0 | " | " | 202.3 | 3.2 | 4/4 | 2.4 | 4/4 | 2.2 | 4/4 |
| | 13 | 4.0 | 0.0006 | " | 203.1 | × | 0/4 | × | 0/4 | × | 0/4 |
| | 14 | " | 0.0010 | " | " | × | 0/4 | × | 0/4 | × | 0/4 |
| Invention | 15 | " | 0.0060 | " | " | 2.3 | 4/4 | 1.8 | 4/4 | 1.3 | 4/4 |
| Comparison | 16 | " | 0.0103 | " | " | 4.7 | 4/4 | 1.8 | 4/4 | 1.4 | 4/4 |
| | 17 | " | 0.0206 | " | " | 4.6 | 4/4 | 2.0 | 4/4 | 1.3 | 4/4 |
| | 18 | 8.0 | 0.0006 | " | 203.5 | × | 0/4 | *×* | 0/4 | × | 0/4 |
| | 19 | " | 0.0010 | " | " | × | 0/4 | × | 0/4 | × | 0/4 |
| | 20 | " | 0.0021 | " | " | 1.7 | 4/4 | 1.5 | 4/4 | 1.4 | 4/4 |
| Invention | 21 | " | 0.0031 | " | " | 2.1 | 4/4 | 1.9 | 4/4 | 1.5 | 4/4 |
| | 22 | " | 0.0060 | " | " | 1.5 | 4/4 | 1.4 | 4/4 | 1.5 | 4/4 |
| | 23 | " | 0.0080 | " | " | 1.9 | 4/4 | 1.6 | 4/4 | 1.2 | 4/4 |
| Comparison | 24 | " | 0.0103 | " | " | 6.4 | 4/4 | 3.9 | 4/4 | 2.9 | 4/4 |
| | 25 | " | 0.0206 | " | " | 5.3 | 4/4 | 3.7 | 4/4 | 3.3 | 4/4 |
| | 26 | " | 0.0480 | " | " | 3.2 | 4/4 | 2.8 | 4/4 | 2.2 | 4/4 |
| | 27 | " | 0.4000 | " | " | 2.5 | 4/4 | 1.9 | 4/4 | 1.6 | 4/4 |
| | 28 | " | 0.4500 | " | " | 2.3 | 4/4 | 1.6 | 4/4 | 1.3 | 4/4 |
| | 29 | " | 0.7912 | " | " | 3.1 | 4/4 | 2.2 | 4/4 | 1.9 | 4/4 |
| | 30 | 10.0 | 0.0006 | " | 203.3 | × | 0/4 | × | 0/4 | × | 0/4 |
| | 31 | " | 0.0010 | " | " | 2.4 | 2/4 | 2.1 | 4/4 | × | 0/4 |
| Invention | 32 | " | 0.0060 | " | " | 2.1 | 4/4 | 1.8 | 4/4 | 1.7 | 4/4 |
| Comparison | 33 | " | 0.0103 | " | " | 2.0 | 4/4 | 2.3 | 4/4 | 2.3 | 4/4 |
| | 34 | " | 0.0206 | " | " | 3.1 | 4/4 | 2.5 | 4/4 | 1.6 | 4/4 |
| Note 1: The decimal numbers represent the time to wetting (sec) and the fractional numbers such as "4/4" represent, by the denominator, the numer of measurements and, by the numerator, the number of successful measurements. The symbol " × " means "unmeasureable". | | | | | | | | | | | |
| Note 2: The wetting test was carried out in air. | | | | | | | | | | | |
| Note 3: Wetting Test Conditions Counterpart material (Base material):Untreated Cu. Immersion volume:5x40x0.1mm. Tester. RHESCA Meniscus Tester (Solder Checker Model SAT-5000) Test Flux: RMA type flux, Tamura Kaken ULF-500VS | | | | | | | | | | | |

**Table 2**

| Properties of Zn-Bi-Al-Sn Solder Alloys | | | | | | | | | | | | |
|---|---|---|---|---|---|---|---|---|---|---|---|---|
| | Sample No. | Composition (wt%) | | | | Melting Point (°C) | Time to Wetting (sec) (Note) | | | | | |
| | | Zn | Bi | Al | Sn | | 240°C | | 250°C | | 260°C | |
| Comparison | 35 | 8.0 | 3.0 | - | Bal. | 198.5 | × | 0/4 | × | 0/4 | × | 0/4 |
| | 36 | " | " | 0.0005 | " | " | × | 0/4 | × | 0/4 | × | 0/4 |
| | 37 | " | " | 0.0010 | " | " | 1.5 | 1/4 | 2.2 | 4/8 | × | 0/4 |
| Invention | 38 | " | " | 0.0020 | " | " | 2.4 | 4/4 | 1.7 | 4/4 | 1.5 | 4/4 |
| | 39 | " | " | 0.0060 | " | " | 2.0 | 4/4 | 1.3 | 4/4 | 1.1 | 4/4 |
| | 40 | " | " | 0.0100 | " | " | 2.4 | 4/4 | 3.0 | 4/4 | 1.1 | 4/4 |
| Comparison | 41 | " | " | 0.0200 | " | " | 3.9 | 4/4 | 4.5 | 4/4 | 3.1 | 4/4 |
| | 42 | " | " | 0.1000 | " | " | 4.5 | 4/4 | 2.8 | 4/4 | 2.4 | 4/4 |
| | 43 | " | " | 0.2000 | " | " | 2.2 | 4/4 | 1.4 | 4/4 | 1.5 | 4/4 |
| | 44 | " | " | 0.6500 | " | " | 1.4 | 4/4 | 1.6 | 4/4 | 1.1 | 4/4 |
| | 45 | " | " | 0.6500 | " | " | 0.6 | 4/4 | 0.4 | 4/4 | 0.6 | 4/4 |
| | 46 | 1.0 | " | 0.0060 | " | 226.1 | 2.1 | 4/4 | 1.5 | 4/4 | 1.2 | 4/4 |
| Invention | 47 | 4.0 | " | " | " | 208.9 | 1.8 | 4/4 | 1.2 | 4/4 | 1.1 | 4/4 |
| | 48 | 8.0 | " | " | " | 200.2 | 2.0 | 4/4 | 1.3 | 4/4 | 1.1 | 4/4 |
| | 49 | 10.0 | " | " | " | 201.3 | 1.5 | 4/4 | 1.7 | 4/4 | 1.3 | 4/4 |
| Comparison | 50 | 20.0 | " | " | " | 200.2 | 4.0 | 3/4 | × | 0/4 | 3.4 | 1/4 |
| Invention | 51 | 8.0 | - | " | " | 203.5 | 1.5 | 4/4 | 1.4 | 4/4 | 1.5 | 4/4 |
| Comparison | 52 | " | 1.0 | " | " | 201.0 | 3.2 | 4/4 | 2.9 | 4/4 | 2.5 | 4/4 |
| Invention | 53 | " | 3.0 | " | " | 200.2 | 2.0 | 4/4 | 1.3 | 4/4 | 1.1 | 4/4 |
| | 54 | " | 6.0 | " | " | 199.0 | 1.4 | 4/4 | 1.2 | 4/4 | 1.1 | 4/4 |
| Comparison | 55 | " | 8.0 | " | " | 195.7 | 1.4 | 4/4 | 1.2 | 4/4 | 1.1 | 4/4 |
| | 56 | " | 10.0 | " | " | 195.2 | 1.4 | 4/4 | 1.2 | 4/4 | 1.1 | 4/4 |
| | 57 | Pb63.0 | | | " | 183.0 | 1.0 | 4/4 | 0.8 | 4/4 | 0.7 | 4/4 |
| | 58 | Ag 3.0, Cu 0.7 | | | " | 221.1 | 2.0 | 4/4 | 1.2 | 4/4 | 0.9 | 4/4 |
| | 59 | 9.0 | - | - | " | 207.0 | × | 0/4 | × | 0/4 | × | 0/4 |
| | 60 | 8.0 | 3.0 | - | " | 198.5 | × | 0/4 | × | 0/4 | × | 0/4 |
| | 61 | 8.0 | " | - | " | " | 1.4 | 4/4 | 0.6 | 4/4 | 0.8 | 4/4 |
| | 62 | 6.1 | " | Cu 0.24 | " | 207.8 | × | 0/4 | × | 0/4 | × | 0/4 |
| | 63 | 7.4 | " | Cu 0.77 | " | 209.9 | × | 0/4 | × | 0/4 | × | 0/4 |
| | 64 | 7.6 | 2.9 | Ge 0.06 | " | 200.5 | × | 0/4 | × | 0/4 | × | 0/4 |
| | 65 | 7.8 | 3.0 | Cu 0.7, Ge 0.05 | " | 204.7 | × | 0/4 | × | 0/4 | × | 0/4 |
| Note 1: The decimal numbers reperesent the time to wetting (sec) and the fractional numbers such as "4/4" represent, by the denominator, the number of measurements and, by the numerator, the number of successful measurements. The symbol "×" means "unmeasureable". Note 2: The wetting test was carried out in air, except for Samples 45 and 61 tested in nitrogen gas atmosphere containing 2000ppm oxygen. Note 3: Wetting Test Conditions Couterpart material (Base material) : Untreated Cl Immersion volume: 5x40x0.1mm Tester RHESCA Meniscus Tester (Solder Checker Model SAT-5000) Test Flux: RMA type flux, Tamura Kaken ULF-500vs | | | | | | | | | | | | |

### <Property of Solder Powder and Effect of Al>

An experimental study was conducted on the effect of Al on the property of the solder powder, which is a typical form of a Sn-Zn solder alloy in the industrial use for solder bonding.

### [1] Oxidation Suppression by Al

The wettability of a solder is deteriorated by oxidation of the solder. In a Sn-Zn based solder, Zn is very sensitive to oxidation to form a thick, loose Zn oxide film causing deterioration of wettability.

The wettability of a Sn-Zn based solder is significantly improved by the addition of Al because Al is oxidized preferentially to Zn on the solder surface in contact with environmental air. This is because Al atoms release electrons more easily to exhibit higher reactivity with oxygen in comparison with Zn atoms, as can be seen from the well-known data summarized in the following table.

**Table:**

| Electron Releasability of Zn and Al | | |
|---|---|---|
| Parameter for electron releasablility | Zn | Al |
| Energy for ionization (kcal/J) | 217 | 138 |
| Electronegativity (Pauling's value) | 1.6 | 1.5 |

An Al oxide film has a very high density, and once formed, prevents further invasion of oxygen to maintain the Al oxide film thin while preventing oxidation of Zn.

The formation of an Al oxide film on the surface of a Sn-Zn based solder is significantly influenced by segregation of Al in the solder surface region. The inventors studied the surface segregation of Al in a particle of a solder powder applicable in the industrial use as a main component of a solder paste.

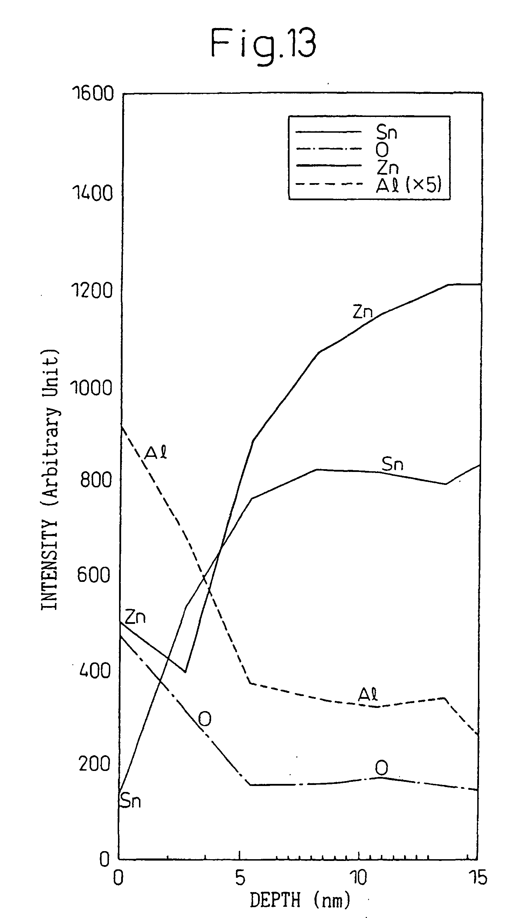

Figure 13 shows the concentration distribution of elements along the depth direction from the surface of a solder powder particle (40 µm in diameter) of Sn-6.7 wt% Zn-0.0024 wt% Al alloy. The preparation of the solder powder and the measurement of the element concentration distribution were carried out as summarized below.

### Preparation of Solder Powder

A melt having a blend composition based on a melting yield with respect to a target alloy composition was prepared by melting at 300°C and held at 220°C in a non-oxidizing atmosphere, followed by centrifugal spraying to produce a powder.

The powder was then classified to provide a particle size of 38 to 45 µm in diameter. Fig. 13 shows the result for a powder particle having a diameter of 40 µm.

An ICP analysis was carried out to determine the powder alloy composition referred to above.

### Measurement of Element Concentration Distribution

An Auger analysis was conducted to determine the concentration distributions of Sn, Zn, Al and O along the depth direction from the particle surface by using the Auger analyzer and under the measurement conditions summarized below.
Auger Analyzer:
   JEOL Ltd., Micro-Auger Electron
   Spectroscope JAMP-7800F
Measurement Conditions:
   Acceleration Voltage: 10 kV
   Irradiation Current: 3 nA
   Measurement Interval: 300 nm x 5 sweeps
   Etching Rate: 30 nm/min (based on SiO2)

As can be seen from Fig. 13, Al is segregated to a high concentration within a surface region to a depth of several nm from the particle surface. The observed oxygen (O) is due to unavoidable oxidation occurring during preparation of the solder powder and is also segregated in the surface region together with the segregated Al to suggest that an Al oxide file having a thickness of several nm is formed on the particle surface.

Thus, an Al-added Sn-Zn based alloy is provided with a surface region containing Al segregated at a high concentration to prevent Zn from being oxidized, thereby ensuring good wettability. An Al oxide film is very dense as described above and effectively prevents invasion of water to provide a soldered bond with improved corrosion resistance at high temperatures in high humidity environments.

### [2] Solder Ball Formation and Al Content

As discussed above, the presence of Al is very effective in improving the wettability of Sn-Zn based alloys through formation of an Al oxide film.

However, an excessive amount of Al provides a soldered bond with undesired solder balls, i.e. solder powder particles remaining unmelted during soldering operation, to cause poor bonding.

To prevent solder balls from forming in a soldered bond, the Al content must not be more than 0.0080 wt% for the Bi-free solder alloy and must not be more than 0.0100 wt% for the Bi-containing solder alloy, according to the first and second aspects of the present invention.

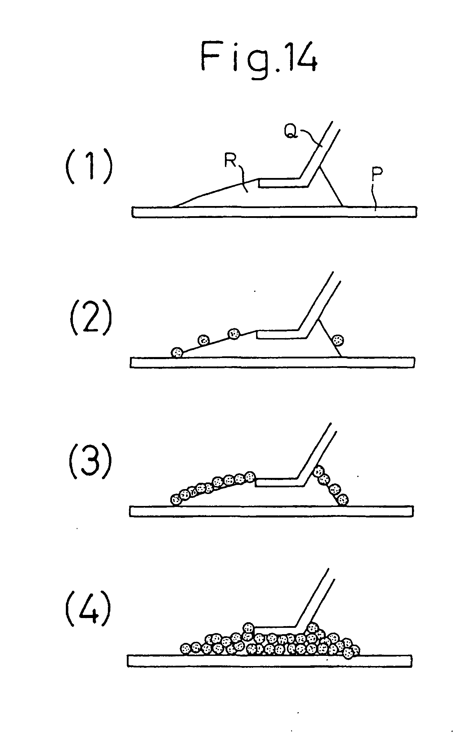

Figures 14(1) to 14(4) schematically show the incidence of solder balls in a soldered bond, in which a lead Q is soldered to a substrate P with a solder R.

Fig. 14(1) shows a soldered bond R formed by complete melting of solder powder particles, that is achieved when the Al content of the solder powder is within the present inventive range.

Figs. 14(2) to 14(4) show soldered bonds R formed when the Al content exceeds the upper limit of the inventive range: (2) the Al content is slightly excessive such that a small number of solder balls B are scattered on the surface of a soldered bond R: (3) the Al content is further increased to cause incidence of solder balls B entirely covering the surface of a soldered bond R: and (4) the Al content is extremely excessive, so that a solder powder particles are not melted at all and the soldered bond R is merely composed of assembled solder balls B, i.e. unmelted solder powder particles. It is noted that the solder balls B are shown in an enlarged size for clarity.

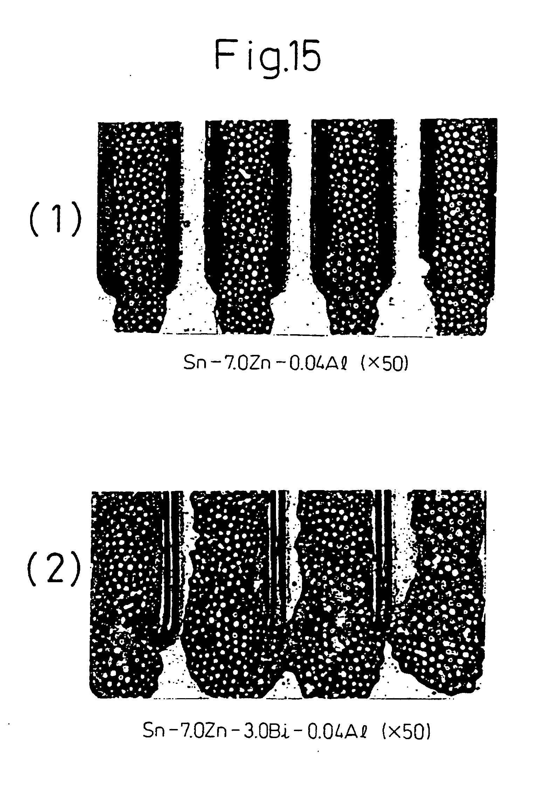

Figures 15(1) and 15(2) are photographs showing the exterior appearance of the soldered bonds formed by using Sn-7.0 wt% Zn-0.04 wt% Al and Sn-7.0 wt% Zn-3.0 wt% Bi-0.04 wt% Al solder alloys, respectively. In both cases, the Al content exceeds the present inventive upper limit of 0.0080 wt% for the Bi-free composition or 0.0100 wt% for the Bi-containing composition and a large number of solder balls entirely cover the surface of the soldered bond. The respective solder balls have the same size as the solder powder particles blended in a solder paste and are considered to be the respective solder powder particles remaining unmelted.

Tables 3 and 4 show the incidence of solder balls in soldered bonds formed by soldering with solder powders having different Al contents, summarizing the number of solder balls, the rate of incidence of solder balls and the quality of soldered bond, for Bi-free and Bi-containing solder alloys of the first and second aspects of the present invention, respectively.

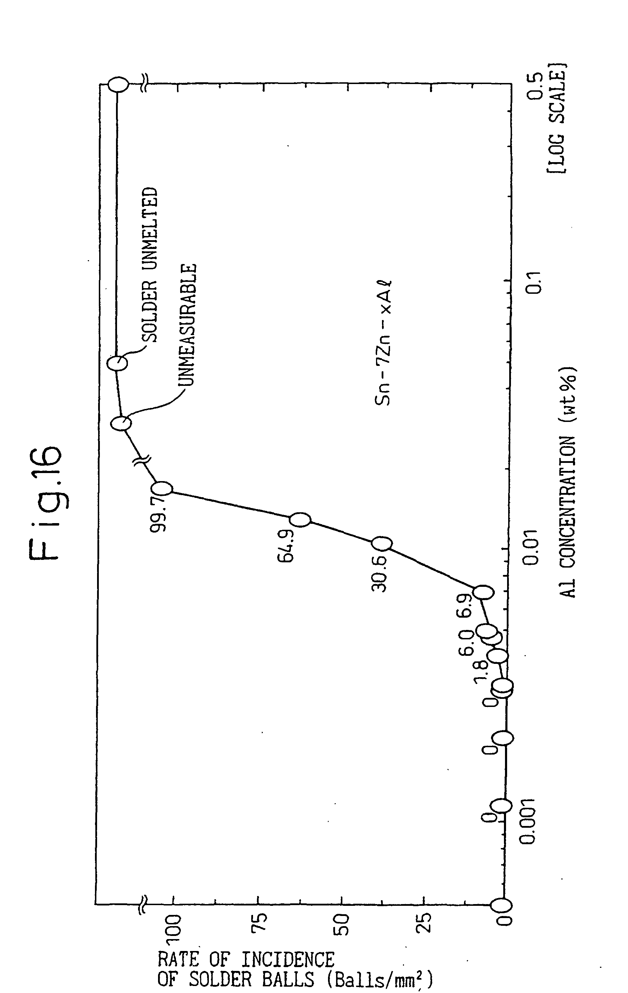

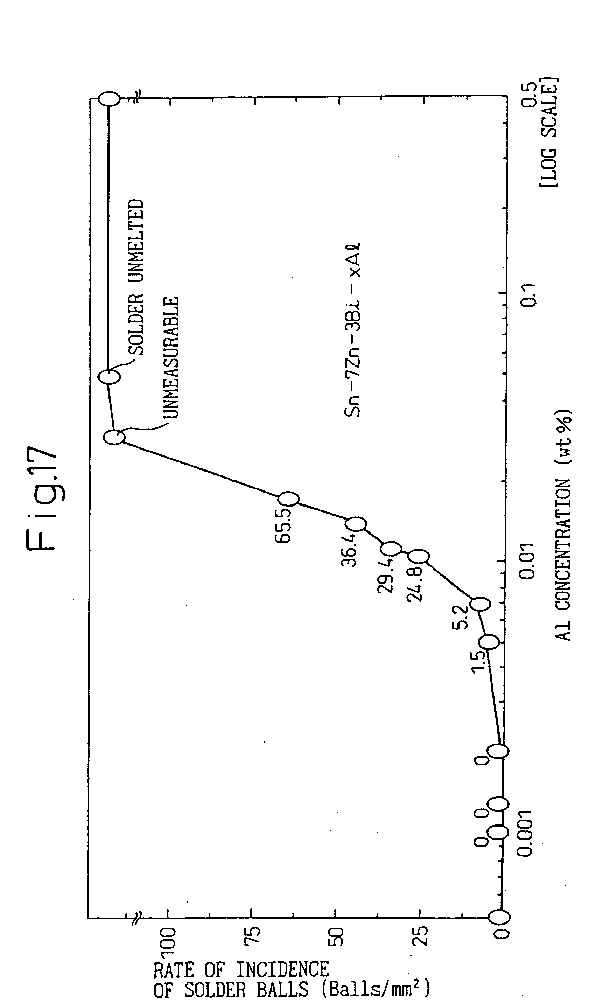

Figures 16 and 17 shows the relationship between the Al content and the rate of incidence of solder balls based on the data from Tables 3 and 4, respectively.

**Table 3**

| Sn-Zn-Al: Solder Ball Formation in Soldered Bond | | | | | | | |
|---|---|---|---|---|---|---|---|
| | Composition (wt%) | | | Melting point point (°C) | Solder balls (#) | | |
| | Zn | Al | Sn | | Number | Rate of incidence | Bond Quality |
| Comparison | 7.0 | ― | Bal. | 201.6 | 0 | 0.0 | ○ |
| | " | 0.0013 | " | " | 0 | 0.0 | ○ |
| Invention | " | 0.0020 | " | " | 0 | 0.0 | ○ |
| | " | 0.0030 | " | " | 0 | 0.0 | ○ |
| | " | 0.0031 | " | " | 0 | 0.0 | ○ |
| | " | 0.0040 | " | " | 6 | 1.8 | ○ |
| | " | 0.0050 | " | " | 15 | 4.5 | ○ |
| | " | 0.0052 | " | " | 20 | 6.0 | ○ |
| | " | 0.0070 | " | " | 23 | 6.9 | ○ |
| Comparison | " | 0.0110 | " | " | 102 | 30.6 | × |
| | " | 0.0130 | " | " | 216 | 64.9 | × |
| | " | 0.0170 | " | " | 332 | 99.7 | × |
| | " | 0.0220 | " | " | * | * | × |
| | " | 0.0400 | " | " | * * | * * | × |
| | " | 0.6500 | " | " | * * | * * | × |
| (#) 1: Soldering conditions | | | | | | | |
| Atmosphere : Nitrogen gas (oxygen concentration less than 500ppm) | | | | | | | |
| Temperature: 215°C | | | | | | | |
| Size of solder powder particles: φ38-45 µm | | | | | | | |
| Paste flux: Nihon Genma SZ255-GK | | | | | | | |
| Paste composition: Solder powder 88wt% + Paste flux 12wt% | | | | | | | |
| Printing plate for solder paste: Metal screen (thickness 150µm) | | | | | | | |
| Soldering object: Solder lead Q to substrate P below | | | | | | | |
| P: Heat-resistant prefluxed Cu plate (110 x 110 x 1.6 mm) | | | | | | | |
| Q: Cu lead of QPF parts (preplated with 5µm thick Sn-10Pb) | | | | | | | |
| (#) 2: "Number": Number of solder balls observed in 3.33mm² area | | | | | | | |
| ( * : Unmeasurable, * * : Unmelted) | | | | | | | |
| (#) 3: "Rate of incidence": Balls/mm² | | | | | | | |
| ( * : Unmeasurable, * * : Unmelted) | | | | | | | |
| (#) 4: "Bond quality": | | | | | | | |
| Good "○" for rate of incidence less than 25 balls/mm² | | | | | | | |
| Poor " ×" for rate of incidence more than 25 balls/mm² | | | | | | | |

**Table 4**

| Sn-Zn-Bi-Al: Solder Ball Formation in Soldered Bond | | | | | | | | |
|---|---|---|---|---|---|---|---|---|
| | Composition (wt%) | | | | Melting point (°C) | Solder Balls (#) | | |
| | Zn | Bi | Al | Sn | | Number | Rate of incidence | Bond quality |
| Comparison | 7.0 | 3.0 | - | Bal. | 201.6 | 0 | 0.0 | ○ |
| | " | " | 0.0001 | " | " | 0 | 0.0 | ○ |
| | " | " | 0.0013 | " | " | 0 | 0.0 | ○ |
| Invention | " | " | 0.0022 | " | " | 0 | 0.0 | ○ |
| | " | " | 0.0050 | " | " | 5 | 1.5 | ○ |
| | " | " | 0.0070 | " | " | 17 | 5.2 | ○ |
| | " | " | 0.0100 | " | " | 82 | 24.6 | ○ |
| Comparison | " | " | 0.0110 | " | " | 97 | 29.4 | × |
| | " | " | 0.0130 | " | " | 120 | 36.4 | × |
| | " | " | 0.0170 | " | " | 216 | 65.5 | × |
| | " | " | 0.0220 | " | " | * | * | × |
| | " | " | 0.0400 | " | " | * * | * * | × |
| | " | " | 0.6500 | " | " | * * | * * | × |
| (#) 1: Soldering conditions | | | | | | | | |
| Atmosphere : Nitrogen gas (oxygen concentration less than 500ppm) | | | | | | | | |
| Temperature: 215°C | | | | | | | | |
| Size of solder powder particles: φ 38-45µm | | | | | | | | |
| Paste flux: Nihon Genma SZ255-GK | | | | | | | | |
| Paste composition: Solder powder 88wt% + Paste flux 12wt% | | | | | | | | |
| Printing plate for solder paste: Metal screen (thickness 150µm) | | | | | | | | |
| Soldering object: Solder lead Q to substrate P below | | | | | | | | |
| P: Heat-resistant prefluxed Cu plate (110 x 110 x 1.6 mm) | | | | | | | | |
| Q: Cu lead of QPF parts (preplated with 5µm thick Sn-10Pb) | | | | | | | | |
| (#) 2: "Number": Number of solder balls observed in 3.33mm² area | | | | | | | | |
| ( * : Unmeasurable, * * : Unmelted) | | | | | | | | |
| (#) 3: "Rate of incidence": Balls/mm² | | | | | | | | |
| ( * : Unmeasurable, * * : Unmelted) | | | | | | | | |
| (#) 4: "Bond quality": | | | | | | | | |
| Good "○" for rate of incidence less than 25 balls/mm² | | | | | | | | |
| Poor "×" for rate of incidence more than 25 balls/mm² | | | | | | | | |

These data clearly show that the solder ball incidence rate is sharply increased when the Al content exceeds the present inventive upper limit.

Therefore, to ensure substantial prevention of the solder ball formation in soldered bonds, the Al content must not be more than 0.0080 wt% for Bi-free solder alloys and must not be more than 0.0100 wt% for Bi-containing solder alloys, according to the first and second aspects of the present invention, respectively.

The inventors believe that the presence of Al in excessive amounts causes the sharp increase in the solder ball incidence rate for the following reasons.

Aluminum oxide, Al₂O₃, has a high melting point of 2015°C and is not melted at soldering temperatures of about 200°C.

When the Al content is within the present inventive range, particularly is not more than the specified upper limit, an Al oxide film formed on the surface of solder powder particles forms a very thin and weak shell, so that it cannot support itself but collapse when the solder particle encapsulated in the shell is melted during soldering, even though the shell itself is not melted, and allows coalescence of the melted solder powder particles with each other to form a sound bond. The collapsed Al oxide film is contained in the soldered bond as a trace amount of impurity and has no substantial influence on the bond quality.

In contrast, when the Al content is more than the specified upper limit, an Al oxide film on the surface of solder particles forms a thick and strong shell which does not collapse but remains as a self-supporting structure during soldering and prevents coalescence of the melted solder powder particles during soldering, so that the respective solder powder particles remain as solder balls after completion of soldering.

It is thus very important that the present inventive solder alloy has the specified upper limit of the Al content not only to provide the solder alloy with good wettability but also to prevent formation of solder balls when the solder alloy is used in a powder form.

As described above, the solder alloys having the chemical compositions within the specified range provide a low melting temperature and good wettability comparable to that of the conventional Pb-Sn solder alloy, without using the environmentally harmful Pb.

Moreover, the solder alloy of the present invention contains inexpensive Zn as the major constituent element and is as inexpensive as the Pb-Sn solder alloy conventionally used in a large amount for electric and electronic devices.

No problems occur if the solder alloy according to the present invention contains minute amounts of oxygen, nitrogen, hydrogen or other impurity elements. However, the oxygen amount should be as small as possible because oxygen, if present in a large amount, would embrittle the solder alloy.

### INDUSTRIAL APPLICABILITY

To summarize, the present invention provides a Pb-free solder alloy and a soldered bond using the same, in which the solder alloy has no harmful environmental effect but has a solderability comparable to that of the conventional Pb-Sn solder alloy.

## Claims

1. A solder alloy consisting of:
Zn: 3.0 - 14.0 wt%,
Al: 0.0020 - 0.0080 wt%, and
optionally Bi 3.0-6.0 wt%
the balance of Sn and unavoidable impurities wherein the Al content is 0.0020-0.0100 wt% when Bi is present.

2. A soldered bond of an electric or electronic device, said bond being composed of a solder alloy consisting of:
Zn: 3.0 - 14.0 wt%,
Al: 0.0020 - 0.0080 wt%, and
optionally Bi: 3.0-6.0 wt%
the balance of Sn and unavoidable impurities.

3. A soldered bond of an electric or electronic device, said bond being composed of a solder alloy consisting of:
Zn: 3.0 - 14.0 wt%,
Bi: 3.0 - 6.0 wt%,
Al: 0.0020 - 0.0100 wt%, and
the balance of Sn and unavoidable impurities.

## Patentansprüche

1. Lötlegierung, bestehend aus:
Zn: 3,0 - 14,0 Gew.-%,
Al: 0,0020 - 0,0080 Gew.-%, und
optional Bi: 3,0 - 6,0 Gew.-%,
der Rest aus Sn und unvermeidbaren Verunreinigungen, worin der Gehalt von Al 0,0020 - 0,0100 Gew.-% beträgt, wenn Bi vorhanden ist.

2. Gelötete Verbindung einer elektrischen oder elektronischen Vorrichtung, wobei diese Verbindung durch eine Lötlegierung gebildet wird, die besteht aus:
Zn: 3,0 - 14,0 Gew.-%,
Al: 0,0020 - 0,0080 Gew.-%, und
optional Bi: 3,0 - 6,0 Gew.-%,
der Rest aus Sn und unvermeidbaren Verunreinigungen.

3. Gelötete Verbindung einer elektrischen oder elektronischen Vorrichtung, wobei diese Verbindung durch eine Lötlegierung gebildet wird, die besteht aus:
Zn: 3,0 - 14,0 Gew.-%,
Bi: 3,0 - 6,0 Gew.-%,
Al: 0,0020 - 0,0100 Gew.-%, und
dem Rest aus Sn und unvermeidbaren Verunreinigungen.

## Revendications

1. Alliage destiné au brasage tendre constitué de :
Zn : 3,0 - 14,0 % en poids,
Al : 0,0020 - 0,0080 % en poids, et
éventuellement Bi : 3,0 - 6,0 % en poids,
le reste étant Sn et des impuretés inévitables,
dans lequel la quantité d'Al est 0,0020 - 0,0100 % en poids quand Bi est présent.

2. Liaison brasée d'un dispositif électrique ou électronique, ladite liaison étant composée d'un alliage de brasage tendre constitué de :
Zn : 3,0 -14,0 % en poids,
Al : 0,0020 - 0,0080 % en poids, et
éventuellement Bi : 3,0 - 6,0 % en poids,
le reste étant Sn et des impuretés inévitables.

3. Liaison brasée d'un dispositif électrique ou électronique, ladite liaison étant composée d'un alliage de brasage tendre constitué de :
Zn : 3,0 - 14,0 % en poids,
Bi : 3,0 - 6,0 % en poids,
Al : 0,0020 - 0,0100 % en poids, et
le reste étant Sn et des impuretés inévitables.
